# FASCICULE DE BREVET EUROPEEN

(11) **EP 2 020 365 B1**
(45) Date de publication et mention de la délivrance du brevet: **08.06.2011**
(21) Numéro de dépôt: 08300241.0
(22) Date de dépôt: 21.07.2008
(51) Int. Cl.: B62D 33/04, F16B 5/00

(54) **Panneau élémentaire avantageusement en forme d'un profilé, notamment pour former une paroi latérale d'un espace de chargement de produits d'un véhicule**
Plattenelement, vorzugsweise in Profilform, insbesondere zur Bildung einer Seitenwand im Laderaum eines Fahrzeugs
Elementary panel, preferably profile shaped, in particular for forming a side wall for the loading space of a vehicle

(30) Priorité: 25.07.2007 FR 0756734
(43) Date de publication de la demande: 04.02.2009
(73) Titulaire: Pommier Gross Aluminium GmbH, 61197 Florstadt (DE)
(72) Inventeur: Preud'Homme, Thierry, 95450 Commeny (FR)
(74) Mandataire: Thinat, Michel

(56) Documents cités:
- EP-A- 0 058 376
- DE-A1- 1 945 687
- FR-A- 1 577 610
- FR-A- 2 703 114

## Description

L'invention concerne un panneau élémentaire avantageusement en forme d'un profilé, notamment pour former une paroi latérale d'un espace de chargement de produits d'un véhicule, par assemblage à d'autres panneaux élémentaires de ce type, le long de ses bords longitudinaux supérieur et inférieur, à l'aide de moyens de verrouillage rapides par encliquetage, le panneau étant formé par deux parois, une paroi intérieure et une paroi extérieure, reliées par des parois d'entretoise, la paroi interne comprenant à un de ses bords longitudinaux d'assemblage un élément de crochet mâle et à son autre bord longitudinal un élément de crochet femelle complémentaire, de façon que ces éléments de crochet mâle et femelle d'un panneau puisse coopérer avec des éléments de crochet femelle et mâle d'un autre panneau, un bord longitudinal de la paroi externe étant en forme d'un U s'ouvrant vers l'extérieur et s'étendant parallèlement à cette paroi et dont la branche intérieure est plus longue et en forme d'un L pour présenter à son extrémité libre un rebord perpendiculaire s'étendant sensiblement jusqu'au niveau de la face inférieure de la paroi, tandis que l'autre bord longitudinal est configuré de façon à s'engager dans un U d'un autre panneau et comporte une nervure qui s'étend vers l'intérieur du panneau et est destinée à être en appui contre la face interne du rebord du U de réception dudit autre panneau.

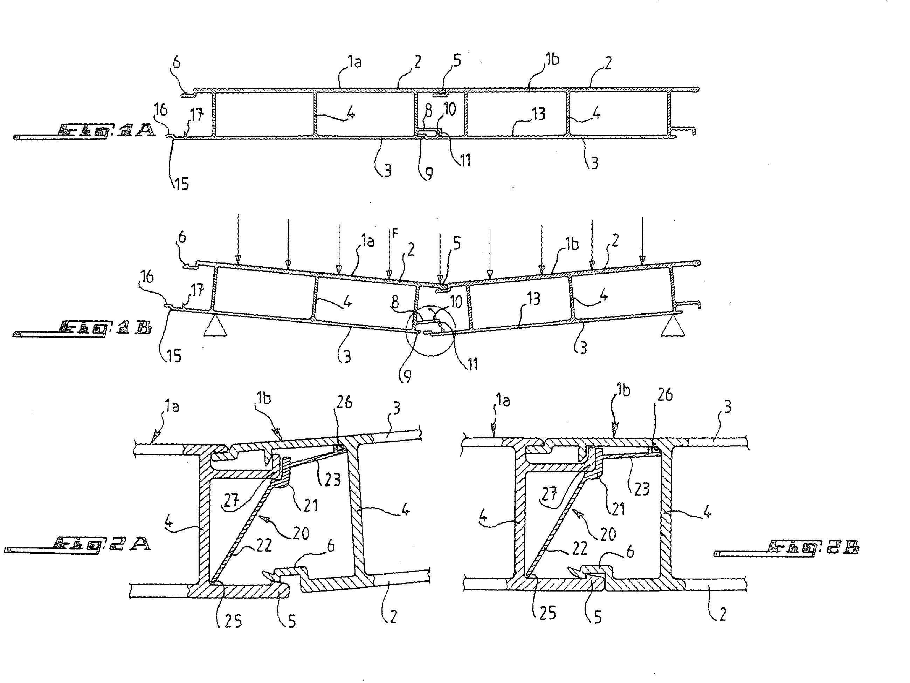

Des panneaux en forme de profilés de ce type sont déjà connus. La figure 1A montre l'assemblage de deux profilés de ce type comme cela se fait pour la réalisation d'une paroi latérale d'un véhicule. Sur ces figures, les deux parois portent les références 1a et 1b. Les parois interne, externe et d'entretoise de chaque profilé sont désignées par les références respectivement 2, 3 et 4. L'élément de crochet mâle s'étendant le long d'un bord de la paroi interne 2 est noté 5 et l'élément de crochet complémentaire à l'autre bord d'un panneau est noté 6. Le bord longitudinal de la paroi externe 3, en forme d'un U, porte la référence 8, la branche extérieure la référence 9, la branche intérieure plus longue la référence 10 et le rebord perpendiculaire à l'extrémité de la branche 10 la référence 11. Comme on le voit, ce rebord s'étend jusqu'au niveau du plan de la face intérieure 13 de la paroi extérieure 3. L'autre bord longitudinal 15 de la paroi 3 est configuré de façon à pouvoir être reçu dans le bord en U 8 d'un autre panneau. Ainsi, le bord 15 du panneau 1b est reçu dans le bord en U 8 du panneau 1a. L'extrémité du bord 15 est déportée vers l'intérieur d'une distance correspondant à l'épaisseur de la paroi 3, pour pouvoir venir en appui contre la face interne de la branche extérieure plus courte 9 du U 8. Le bord comporte, à une certaine distance de l'extrémité 16, la nervure susmentionnée notée 17, qui, à l'état assemblé, comme on le voit au milieu de la figure 1a, vient en appui contre la face interne du rebord 11 de la branche plus longue 10 du U 8.

La figure 1B montre le comportement de la partie d'une paroi formée par assemblage des deux panneaux 1a et 1b, sous l'effet des forces F d'une charge, occasionnées par des produits présents dans l'espace de chargement du véhicule et exerçant une pression sur la paroi latérale du véhicule. Comme l'illustre cette figure 1B, lorsque les forces F augmentent, la branche en forme d'un L 10 au bord de la paroi extérieure 3 du panneau 1a fléchit, ce qui a pour conséquence que le bord 15 du panneau 1b, qui est verrouillé dans la partie en U 8, conformément à la figure 1A puisse sortir de son logement. Il en résulte la rupture de la paroi.

Des panneaux élémentaires de paroi en forme de profilés, tels que les panneaux 1a et 1b, qui sont connus, sont formés par des profilés en métal léger, par exemple en aluminium. Ces profilés, initialement d'une hauteur de 25 à 30 mm ont été dimensionnés pour des charges relativement faibles. La tendance à réduire les coûts dans le domaine de la construction des véhicules automobiles et l'augmentation des prix des métaux légers ont amené les constructeurs à fabriquer des panneaux élémentaires plus longs et plus hauts, par exemple jusqu'à des hauteurs de 40, 50 et 60 mm.

Les panneaux ou profilés tels que 1a et 1b sont en mesure de résister à des pressions de charge jusqu'à 5 Mtr. Mais, lorsque les forces de charge augmentent, il se présente le phénomène illustré à la figure 1b, provoquant la rupture de la paroi.

Un panneau en forme d'un profilé est connu de FR 1577610 A. Cet panneau ne définit pas des éléments de crochet du type mentionné ici.

L'invention a pour but de proposer des panneaux en forme de profilés, qui pallient l'inconvénient qui vient d'être décrit des panneaux connus.

Pour atteindre ce but, un profilé selon l'invention est caractérisé en ce que les bords d'assemblage sont pourvus de moyens de renforcement de la résistance à la flexion de la branche de verrouillage en forme d'un L.

Selon une caractéristique de l'invention, le panneau est caractérisé en ce que le moyen de renforcement est formé par une pièce de support de la branche de verrouillage précitée.

Selon une autre caractéristique de l'invention, le panneau élémentaire est caractérisé en ce que la pièce de support comporte une partie de support du coude de la branche en L et deux jambes de support de la partie qui prennent appui par leur extrémité sur les faces internes des parois intérieure et extérieure.

Selon encore une autre caractéristique de l'invention, le panneau élémentaire est caractérisé en ce que le moyen de renforcement de la branche en L comporte une paroi de support de la branche en L qui s'étend entre la branche et la face interne en regard de la paroi interne du panneau.

Selon encore une autre caractéristique de l'invention, le panneau élémentaire est caractérisé en ce que le moyen de renforcement de la résistance à la flexion de la branche de verrouillage en forme d'un L comporte une barrette qui s'étend parallèlement au rebord d'extrémité et coopère avec un talon d'appui sur la surface interne de la paroi externe du panneau.

Selon encore une autre caractéristique de l'invention, le panneau élémentaire est caractérisé en ce que le panneau est en forme d'un profilé.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant plusieurs modes de réalisation de l'invention et dans lesquels :
- les figures 1A et 1B sont deux vues en coupe d'une partie de paroi latérale d'un espace de chargement de produits d'un véhicule, formé par assemblage de deux panneaux de paroi élémentaire en forme de profilé selon l'état de la technique ;
- les figures 2A et 2B sont des vues en coupe axiale de deux extrémités de deux panneaux en forme de profilés selon un premier mode de réalisation de l'invention, la figure 2A illustrant les deux profilés au cours de leur assemblage et la figure 2B les profiles à l'état assemblé ;
- les figures 3A, 3B et 3C illustrent un second mode de réalisation de l'invention, la figure 3A montrant un seul profilé, la figure 3B deux profilés assemblés et la figure 3C les deux profiles de la figure B sous l'effet des forces de charge F et
- les figures 4A, B et C illustrent un troisième mode de réalisation de panneau en forme de profilés selon l'invention en montrant deux profilés à différents instants de leur assemblage.

Le premier mode de réalisation de l'invention, représenté aux figures 2A et 2B, utilise des panneaux avantageusement en forme de profilés connus tels que représenté aux figures 1A et 1B et élimine le problème du déverrouillage des profilés sous l'effet de forces de charge trop élevées, par insertion entre les deux extrémités de profilé à verrouiller d'une pièce de support supplémentaire désigné par la référence 20. Cette pièce de support 20 comporte une partie de support intermédiaire 21 qui vient en appui contre la partie coudée 27 de la branche en forme de L 10 et deux jambes de support de la partie de support 21 dont les extrémités libres prennent appui sur des faces internes des angles 25, 26 des deux profilés 1a, 1b, qui sont diagonalement opposées, pour empêcher, par l'intermédiaire de la partie 21, le support du coude 27 du U de verrouillage du profilé 1a, la flexion de la branche 10.

Comme il ressort des deux figures 2A et 2B, la pièce de support 20 est insérée avant l'assemblage et prend la position finale selon la figure 2A lorsque les deux profilés sont verrouillés l'un vers l'autre, au niveau de leurs extrémités.

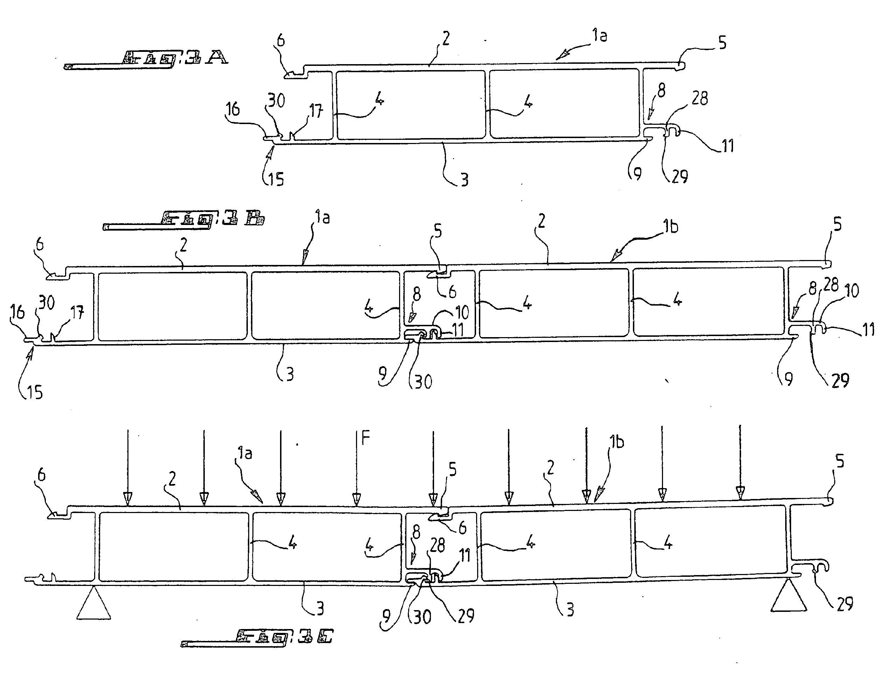

Les figures 3A, 3B, 3C illustrent un deuxième mode de réalisation de l'invention selon lequel le problème de déverrouillage des profilés sous l'effet de charges trop importantes est résolu en prévoyant sur la branche 10 en forme d'un L, du U de verrouillage 8, une barrette supplémentaire 28, qui est parallèle au rebord perpendiculaire 11 et située entre celui-ci et la naissance de la branche. Sur l'extrémité de verrouillage 15 complémentaire est prévu un talon 30 qui fait saillie de la face interne de la paroi 3, et est disposé de façon que la barrette 28 soit placée à l'état assemblé des deux profilés, entre la nervure 17 et le talon 30, comme on le voit sur la figure 3B, et vienne en appui contre le talon lorsque des forces de charge F s'appliquent contre la face interne de la paroi latérale obtenue par assemblage de profilés selon l'invention. La barette 28 est pourvue à son extrémité libre d'un petit crochet 29 destiné à coopérer avec un élément complémentaire sur le talon 30 dans le but d'assurer une bonne tenue du système.

Bien entendu, aussi bien la barrette 28 que le talon 30 s'étendent sur toute la longueur du bord d'assemblage.

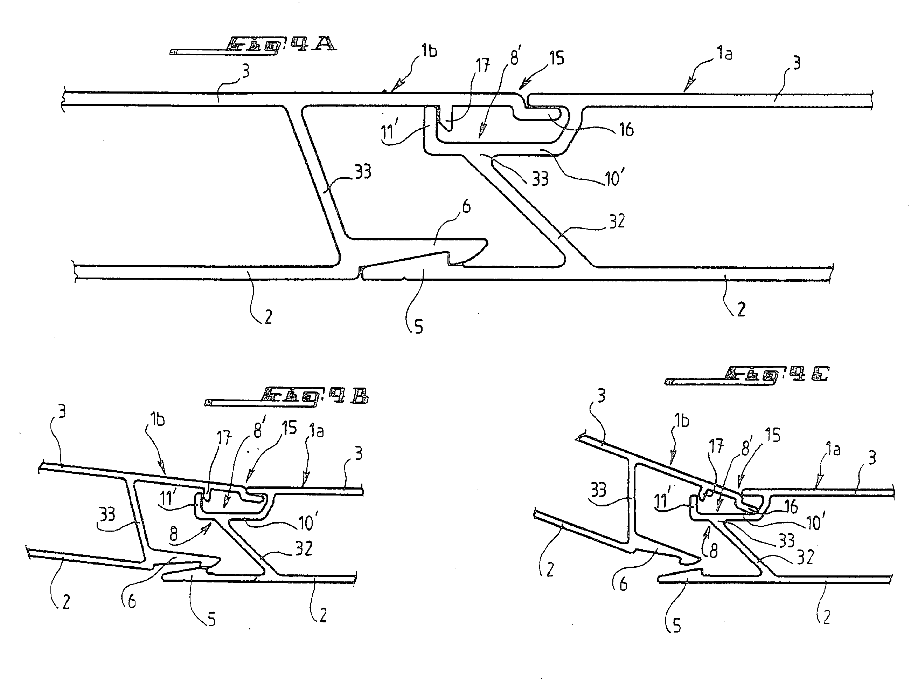

Les figures 4A et 4B montrent un troisième mode de réalisation. Celui-ci prévoit une configuration particulière du bord d'assemblage longitudinal des profilés 1, qui comporte la partie de verrouillage présentant la forme générale d'un U, avec la branche interne 10 plus longue en L. La partie en U et la branche présentent sur les figures 4A et 4B les références respectivement 8', 10', le rebord étant noté 11'.

La particularité de ce troisième mode de réalisation réside dans le fait que le bord d'assemblage comporte une paroi d'entretoise 32 inclinée avantageusement selon un angle de 45° par rapport aux parois d'entretoise 4 des profilés selon les deux premiers modes de réalisation et qui s'étend de la paroi interne 2 vers la branche en L 10' en se raccordant à celui-ci à un endroit 33 relativement proche du rebord 11'. On constate que le bord 15 s'engageant dans la partie en U 8' présente la configuration des profilés connus. Ceci est également le cas pour les éléments de verrouillage mâle et femelle 5 et 6 au niveau de la paroi interne des profilés. Dans la version de réalisation selon les figures 4, la paroi d'entretoise près du bord d'assemblage comportant le bord 15 est également inclinée par rapport à la direction orthogonale des parois, mais selon un angle inférieur à 45°.

Les figures 4B, 4C illustrent deux instants différents du processus d'assemblage des deux profilés représentés 1a, 1b.

On constate que le mode de réalisation selon les figures 4 est conçu selon le principe du premier mode de réalisation des figures 2A et 2B mais évite la pièce de support supplémentaire 20 en prévoyant la face d'entretoise inclinée 32 qui assure la fonction de support de la pièce 20.

Bien entendu, de multiples modifications peuvent être apportées à l'invention telle que décrite et représentée, sans sortir du cadre de l'invention, à condition d'éviter une déformation notamment par flexion de la branche en L 10,10' au bord d'assemblage des profilés.

## Revendications

1. Panneau élémentaire, avantageusement en forme d'un profilé, notamment pour former une paroi latérale d'un espace de chargement de produits d'un véhicule, par assemblage à d'autres panneaux élémentaires de ce type, le long de ses bords longitudinaux d'assemblage supérieur et inférieur, à l'aide de moyen de verrouillage rapide par encliquetage, le panneau étant formé par deux parois, une paroi intérieure (2) et une paroi extérieure (3), reliées par des parois d'entretoise (4), la paroi interne comprenant à l'un de ses bords longitudinaux d'assemblage un élément de crochet mâle (5) et à son autre bord longitudinal un élément de crochet femelle (6) complémentaire, de façon que ces éléments de crochet mâle et femelle d'un panneau puissent coopérer avec les éléments de crochet femelle et mâle d'un autre panneau, un bord longitudinal de la paroi externe étant en forme d'un UV (8) s'ouvrant vers l'extérieur et s'étendant parallèlement à cette paroi et dont la branche intérieure (10) est plus longue et en forme d'un L pour présenter à son extrémité libre un rebord d'extrémité perpendiculaire (11) s'étendant vers l'extérieur, tandis que l'autre bord longitudinal est configuré de façon à s'engager dans un U d'un autre panneau et comporte une nervure (17) qui s'étend vers l'intérieur du panneau et est destiné à être en appui contre la face interne du rebord du U de réception dudit autre panneau, **caractérisé en ce que** les bords d'assemblage sont pourvus de moyens (20 ;28, 30 ; 32) de renforcement de la résistance à la flexion de la branche (10) de verrouillage en forme d'un L.

2. Panneau élémentaire selon la revendication 1, **caractérisé en ce que** le moyen de renforcement est formé par une pièce (20) de support de la branche de verrouillage précitée (10).

3. Panneau élémentaire selon la revendication 2, **caractérisé en ce que** la pièce de support (20) comporte une partie (21) de support du coude de la branche en L (10) et deux jambes (22, 23) de support de la partie (21) qui prennent appui par leur extrémité sur les faces internes des parois intérieure (2) et extérieure (3).

4. Panneau élémentaire selon la revendication 1, **caractérisé en ce que** le moyen de renforcement de la branche en L (10) comporte une paroi (32) de support de la branche en L (10) qui s'étend entre la branche (10) et la face interne en regard de la paroi interne (2) du panneau.

5. Panneau élémentaire selon la revendication 1, **caractérisé en ce que** le moyen de renforcement de la résistance à la flexion de la branche de verrouillage en forme d'un L (10) comporte une barrette (28) qui s'étend parallèlement au rebord d'extrémité (11) et coopère avec un talon d'appui (30) sur la surface interne de la paroi externe (3) du panneau.

6. Panneau élémentaire selon l'une des revendications précédentes, **caractérisé en ce que** le panneau est en forme d'un profilé.

## Claims

1. An elementary panel, advantageously profile-shaped, notably for forming a side wall for a loading space of a vehicle, by being assembled with other elementary panels of this type, along its upper and lower assembly longitudinal edges, with a fast snap-on locking means, the panel being formed with two walls, an inner wall (2) and an outer wall (3) connected through spacer walls (4), the internal wall comprising at one of its assembly longitudinal edges, a male hooking element (5) and at its other longitudinal edge, a mating female hooking element (6), so that these male and female hooking elements of a panel may co-operate with the female and male hooking elements of another panel, a longitudinal edge of the external wall being U-shaped (8) opening outwards and extending parallel to this wall and the inner branch (10) of which is longer and L-shaped so as to have at its free end a perpendicular end edge (11) extending outwards, while the other longitudinal edge (15) is configured so as to engage into a U of another panel and includes a rib (17) which extends towards the interior of the panel, and is intended to bear against the internal face of the edge of the U for receiving said other panel, **characterized in that** the assembly edges are provided with means (20; 28, 30; 32) for reinforcing the flexural strength of the L-shaped locking branch (10).

2. The elementary panel according to claim 1, **characterized in that** the reinforcing means is formed by a part (20) for supporting the aforementioned locking branch (10).

3. The elementary panel according to claim 2, **characterized in that** the supporting part (20) includes a portion (21) for supporting the bend of the L-shaped branch (10) and two legs (22, 23) for supporting the portion (21), which bear by their end upon the internal faces of the inner (2) and outer (3) walls.

4. The elementary panel according to claim 1, **characterized in that** the means for reinforcing the L-shaped branch (10) includes a wall (32) for supporting the L-shaped branch (10), which extends between the branch (10) and the internal face facing the internal wall (2) of the panel.

5. The elementary panel according to claim 1, **characterized in that** the means for reinforcing the flexural strength of the L-shaped locking branch (10) includes a small bar (28), which extends parallel to the end edge (11) and cooperates with a supporting heel (30) on the internal surface of the external wall (3) of the panel.

6. The elementary panel according to one of the preceding claims, **characterized in that** the panel is profile-shaped.

## Patentansprüche

1. Plattenelement, vorzugsweise in Profilform, insbesondere zur Bildung einer Seitenwand im Produktladeraum eines Fahrzeugs, durch Verbindung mit anderen Plattenelementen dieser Bauart entlang seiner oberen und unteren Längsverbindungsränder mit Hilfe von Schnellverriegelungsmittel durch Einrasten, wobei die Platte von zwei Wänden gebildet wird, einer Innenwand (2) und einer Außenwand (3), die durch Querstrebwände (4) verbunden sind, wobei die Innenwand an einem ihrer Längsverbindungsränder ein männliches Hakenelement (5) und an ihrem anderen Längsrand ein komplementäres weibliches Hakenelement (6) derart umfasst, dass diese männlichen und weiblichen Hakenelemente einer Platte mit den männlichen und weiblichen Hakenelementen einer anderen Platte zusammenarbeiten können, wobei ein Längsrand der Außenwand in Form eines sich nach außen öffnenden U (8) ist und sich parallel zu dieser Wand erstreckt und dessen Innenschenkel (10) länger ist und in Form eines L, um an seinem freien Ende einen senkrechten Endumschlag (11) aufzuweisen, der sich nach außen erstreckt, wogegen der andere Längsrand (15) derart konfiguriert ist, dass er in ein U einer anderen Platte eingreift und eine Rippe (17) aufweist, die sich nach innen zur Wand erstreckt und dazu bestimmt ist, sich auf der Innenseite des Aufnahmeumschlags des U der anderen Platte abzustützen, **dadurch gekennzeichnet, dass** die Verbindungsränder mit Mitteln (20; 28, 30; 32) zur Verstärkung des Biegewiderstands des L-förmigen Verriegelungsschenkels (10) ausgestattet sind.

2. Plattenelement nach Anspruch 1, **dadurch gekennzeichnet, dass** das Verstärkungsmittel von einem Stützteil (20) des vorgenannten Verriegelungsschenkels (10) gebildet wird.

3. Plattenelement nach Anspruch 2, **dadurch gekennzeichnet, dass** das Stützteil (20) einen Stützabschnitt (21) der Krümmung des L-förmigen Schenkels (10) aufweist und zwei Stützbeine (22, 23) des Abschnitts (21), die sich mit ihrem Ende auf den Innenseiten der Innenwand (2) und der Außenwand (3) abstützen.

4. Plattenelement nach Anspruch 1, **dadurch gekennzeichnet, dass** das Verstärkungsmittel des L-förmigen Schenkels (10) ein Stützwand (32) des L-förmigen Schenkels (10) aufweist, die sich zwischen dem Schenkel (10) und der Innenseite gegenüber der Innenwand (2) der Platte erstreckt.

5. Plattenelement nach Anspruch 1, **dadurch gekennzeichnet, dass** das Verstärkungsmittel des Biegewiderstands des L-förmigen Verriegelungsschenkels (10) einen Steg (28) aufweist, der sich parallel zum Endumschlag (11) erstreckt und mit einer Stützferse (30) auf der Innenseite der Außenwand (3) der Platte zusammenarbeitet.

6. Plattenelement nach einem der vorangehenden Ansprüche, **dadurch gekennzeichnet, dass** die Platte in Profilform ist.
